# EUROPEAN PATENT APPLICATION

(11) **EP 0 656 546 A2**
(43) Date of publication of application: **07.06.1995**
(21) Application number: 94308975.5
(22) Date of filing: 02.12.1994
(51) Int. Cl.: G01S 17/02, G01S 7/483

(54) **Proximity detector**

(30) Priority: 04.12.1993 GB 9324907
(71) Applicant: GEMNEW LIMITED, Bristol BS1 6JS (GB)
(72) Inventor: Lee, Mark Anthony, Camberley, Surrey, GU15 1BL (GB)
(74) Representative: Gordon, Richard John Albert

(57) **Abstract**

A proximity detector comprises a series of transmitters for generating pulses (16) of infra red radiation within a zone of radiation and a series of receivers (10) for sensing pulses (18a,18b,18c,18d) of radiation reflected from objects within a zone of reception intersecting with the zone of radiation and for generating signals (20a,20b,20c,20d) indicative of the intensity of the reflected pulses (18a,18b,18c,18d), the transmitted pulses (16) being shaped such that a side thereof is an exponential curve.

## Description

This invention relates to a proximity detector for use with a motor vehicle.

In GB-A 2 214 290 there is disclosed a proximity detector for detecting objects behind a reversing vehicle the detector including a transmitter for transmitting infra red radiation and a receiver sensitive to the radiation such that objects are detected if located within a zone of the radiation to which the receiver is sensitive. However, a disadvantage of the detector is that the zone is of small area and, consequently, the detector only detects objects which are located within that small area.

In EP-A 0 505 028 A there is disclosed a proximity detector in which the disadvantage is overcome by providing a series of transmitter units each having a plurality of transmitters adapted to transmit pulses of infra red radiation and a series of reception units each having a plurality of receivers each sensitive to a zone of radiation emitted by the corresponding transmitters. The detector includes an audio unit adapted to emit an audio signal the amplitude of which varies in accordance with the intensity of radiation received at the reception units.

However, since larger objects reflect more radiation than smaller objects, a disadvantage of the detector disclosed in EP-A 0 505 028 is that the amplitude of the audio signal emitted in respect of an object located within the zone of detection is not indicative of the distance of the object from the detector. Instead, for two objects located at the same distance from the detector there may exist an error between the amplitude of a signal generated in response to radiation reflected from a large object and the amplitude of a signal generated in response to radiation reflected from a small object.

The invention is characterised in that the pulses are shaped such that the intensity of transmitted radiation varies exponentially with respect to time from a first intensity to a second intensity and wherein means are provided for generating signals indicative of the maximum width of the radiation pulses sensed by the receivers.

By shaping the transmitted pulses in this way the error between amplitudes generated in respect of objects of differing sizes located at the same distance from the transmitter and receiver units is significantly reduced.

Following is a description, by way of example only and with reference to the accompanying drawings, of one method of carrying the invention into effect.

In the drawings:-
- Figure 1: is a diagrammatic representation of a receiver unit of an embodiment of a proximity detector in accordance with the present invention showing two objects located within a zone of sensitivity of the receiver unit,
- Figure 2: is a chart showing pulses of radiation transmitted from apparatus known hitherto and pulses received in response to the radiation pulses by reflection from two objects of different size,
- Figure 3: is a chart showing the shape of pulses transmitted from the embodiment of the proximity detector in accordance with the present invention and pulses received in response to the transmitted pulses by reflection from two objects of different size.
- Figure 4: is a chart showing the shape of signals generated which are indicative of the maximum width of the pulses shown in Figure 3.

In the embodiment of a proximity detector in accordance with the present invention there is provided a series of transmitter units and a series of receiver units, the transmitter units being spaced alternately with the receiver units along a line. Each of the transmitter units includes a series of transmitters adapted to transmit pulses of infra red radiation and each of the receiver units includes a series of receivers. The transmitter units and receiver units produce zones of transmission of the radiation and zones sensitive to the radiation respectively which zones intersect one another to define a zone of detection within which an object will be detected. The transmitters and receivers are arranged such that regions of high intensity radiation and regions of high radiation sensitivity are produced respectively, the regions extending in directions different one from another. On detection of an object an audio unit generates a signal the amplitude of which is indicative of the intensity of the radiation reflected from the object.

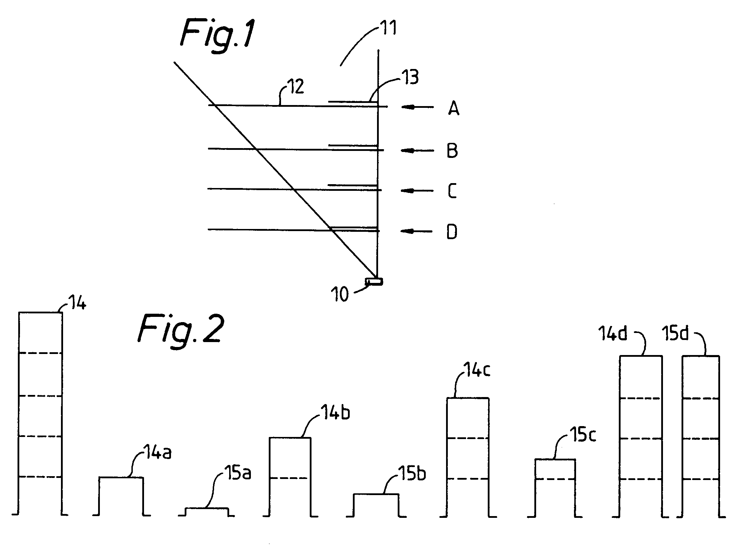

Referring now to the drawings there is shown in Figure 1 a receiver unit 10 comprising a series of receivers (not shown) for sensing radiation incident on the receiver unit 10 from a zone of received reflected radiation 11. A first object 12 and a second object 13 are located within the zone 11 at a distance designated 'A' from the receiver unit 10, the first object 12 having a surface facing the receiver unit 10 which has an area four times as large as the corresponding area of the second object 13. The first and second objects 12, 13 are also shown at locations designated 'B', 'C' and 'D' which are closer to the receiver 10 than location 'A'.

If the transmitter unit transmits a pulse of a type known in previous proximity detecting systems, such as shown at 14 in Figure 2, then with the objects 12, 13 at location 'A' the receiver unit 10 will generate, after amplification, received pulses 14a and 15a which correspond to signals received from the first and second obstacles respectively at location 'A'. Similarly, received pulses 14b to 14d and 15b to 15d correspond to signals received from the first and second obstacles at locations 'B', 'C' and 'D'.

With the objects 12, 13 at location 'A' both the first object 12 and the second object 13 are completely within the zone of received reflected radiation 11 of the receiver unit 10. However, since the area of the surface of the first object 12 facing the detector is four times as large as the corresponding area of the second object 13, it follows that the intensity of the radiation reflected from the first object 12 is four times as large as the intensity of radiation reflected from the second object 13. Therefore, the amplitude of the signal generated by the audio unit in respect of the first object 12 will be four times as large as the signal generated in respect of the second object 13, even though both first and second objects 12, 13 are located at the same distance from the receiver 10.

The situation is similar with the objects 12, 13 at location 'B'. However, in this case, since a smaller area of the surface of the first object 12 is within the zone 11 the intensity of reflected light from the first object 12 will be less than four times as large as the intensity of light from the corresponding surface on the second object 13 and the amplitude of the signal generated in respect of the first object 12 will be closer in magnitude to the amplitude of the signal generated in respect of the second object 13.

It follows therefore that the closer the objects 12, 13 are to the receiver 10, the closer in magnitude one to another are the respective signals generated by the audio unit in respect of the two objects.

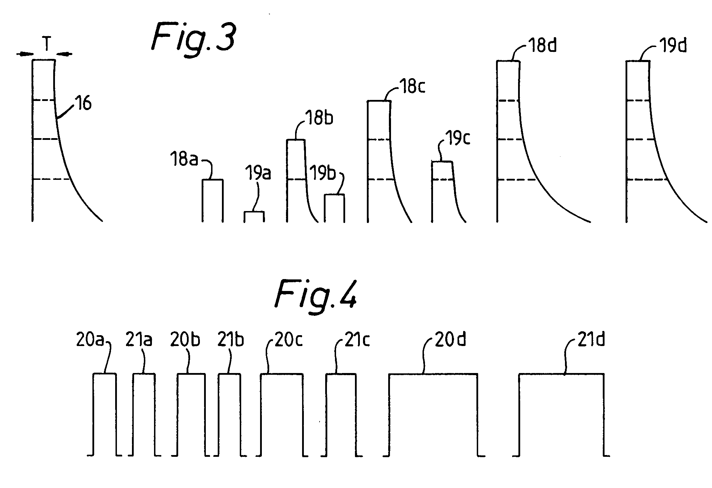

A pulse transmitted by a transmitter in accordance with the present invention is shown at 16 in Figure 3. The pulse 16 is shaped such that the intensity of the transmitted radiation increases rapidly to a maximum value equal to the maximum intensity of the pulse 14 in Figure 2 and the intensity remains constant for a period 'T'. The intensity then decreases exponentially with respect to time. Also shown in Figure 3 are the pulses received at the receiver 10 in response to such a transmitted pulse 16, received pulses 18a to 18d and 19a to 19d corresponding to radiation reflected from first object 12 and second object 13 located at positions 'A' to 'D'.

The height or maximum intensity of each of the pulses 18a to 18d and 19a to 19d is the same as the maximum intensity of the pulses 14a to 14d and 15a to 15d. However, the maximum width of each of the pulses 18a to 18d and 19a to 19d varies in accordance with the maximum intensity of each pulse.

The pulses 18a to 18d and 19a to 19d are amplified such that saturation takes place for all points and pulses 20a to 20d and 21a to 21d shown in Figure 4 are thereby generated, pulses 20a to 20d corresponding to the pulses 18a to 18d and pulses 19a to 19d corresponding to pulses 19a to 19d. The width of the pulses 20a to 20d and 21a to 21d is now indicative of the intensity of radiation reflected from the objects 12, 13.

It can be seen from Figure 4 that the percentage difference between the width of the pulses 20a and 21a, 20b and 21b, 20c and 21c and 20d and 21d, corresponding to the first and second objects located at locations A to D, is less than the percentage difference between the height of the pulses 14a and 15a, 14b and 15b, 14c and 15c and 14d and 15d, corresponding to the first and second objects located at locations A to D.

The width of the received pulses 20a to 20d and 21a to 21d is used to generate an audio signal indicative of the intensity of reflected radiation.

It will be appreciated that a transmitted pulse 16 shaped such that a side thereof is an exponential curve has the effect of reducing the difference between audio signals generated in respect of objects of differing sizes at the same location and that the system provides an indication of the distance of an object from the system in the form of an audible signal which is more reliable than such an indication from systems known hitherto.

It will also be appreciated that the audio signal could comprise a pulsed tone the frequency of which varies in accordance with the intensity of reflected radiation sensed by the receiver units 10.

Furthermore, it will be appreciated that the invention may include sonar transmitters and receivers instead of electromagnetic radiation transmitters and receivers.

It will also be appreciated that the transmitted pulses may be shaped such that two sides of the pulses are exponential curves.

## Claims

1. A proximity detector comprising transmitter means adapted to provide a zone of radiation and receiver means (10) adapted to sense radiation within a zone of reception (11) intersecting with the zone of radiation, the transmitter means being adapted to transmit pulses (16) of radiation, characterised in that the pulses (16) are shaped such that the intensity of transmitted radiation varies exponentially with respect to time from a first intensity to a second intensity and wherein means are provided for generating signals indicative of the maximum width of the radiation pulses sensed by the receivers.

2. A detector as Claimed in Claim 1 characterised in that the intensity of the radiation decreases exponentially with respect to time from a maximum intensity to a minimum intensity.

3. A detector as Claimed in Claim 1 or Claim 2 characterised in that the intensity of the radiation increases exponentially with respect to time from a minimum intensity to a maximum intensity.

4. A detector as claimed in Claim 2 or Claim 3 characterised in that there is provided a plurality of transmitter units and a plurality of receivers units (10).

5. A detector as claimed in Claim 4 characterised in that the transmitter units and receiver units (10) are spaced alternately along a line.

6. A detector as claimed in any of the preceding Claims characterised in that each transmitter unit comprises a plurality of transmitters.

7. A detector as claimed in any of the preceding Claims characterised in that each receiver unit (10) comprises a plurality of receivers.

8. A detector as claimed in Claim 6 characterised in that each transmitter unit generates a zone of transmission having a plurality of regions of high intensity radiation extending in directions different one from another.

9. A detector as claimed in Claim 7 or Claim 8 characterised in that each receiver unit (10) generates a zone of reception (11) having a plurality of regions of high radiation sensitivity extending in directions different one from another.

10. A detector as claimed in any one of the preceding Claims characterised in that means are provided for generating audible pulsed tone signals indicative of the said maximum width of the sensed radiation pulses.
